# FASCICULE DE BREVET EUROPEEN

(11) **EP 0 532 402 B1**
(45) Date de publication et mention de la délivrance du brevet: **10.01.1996**
(21) Numéro de dépôt: 92402449.0
(22) Date de dépôt: 08.09.1992
(51) Int. Cl.: F16K 17/10

(54) **Dispositif d'arrêt automatique et de sécurité notamment aux postes de détente de gaz**
Automatische Sperr- und Sicherheitsvorrichtung, insbesondere für Gasentspannungsstationen
Automatic stop- and safety device, especially for gas expansion stations

(30) Priorité: 13.09.1991 FR 9111345
(43) Date de publication de la demande: 17.03.1993
(73) Titulaire: GAZ DE FRANCE (SERVICE NATIONAL), F-75017 Paris (FR)
(72) Inventeur: Cornil, Jean-Philippe, F-78800 Houille (FR)
(74) Mandataire: Thévenet, Jean-Bruno

(56) Documents cités:
- US-A- 2 498 483
- US-A- 3 389 718

## Description

La présente invention concerne un dispositif d'arrêt automatique et de sécurité utilisable principalement dans le domaine du transport et de la distribution publique ou privée de fluides gazeux et destiné notamment aux postes de détente de gaz.

Dans un réseau de distribution de gaz, il est parfois nécessaire de provoquer la coupure du débit du fluide lorsque, à la suite d'une anomalie quelconque, la pression dans le réseau n'est plus conforme à celle attendue et dépasse une valeur de consigne prédéterminée. Cette consigne peut correspondre aussi bien à un maximum de pression qu'à un minimum de pression.

Cette fonction d'arrêt automatique et de sécurité est assurée par un organe communément appelé vanne de sécurité.

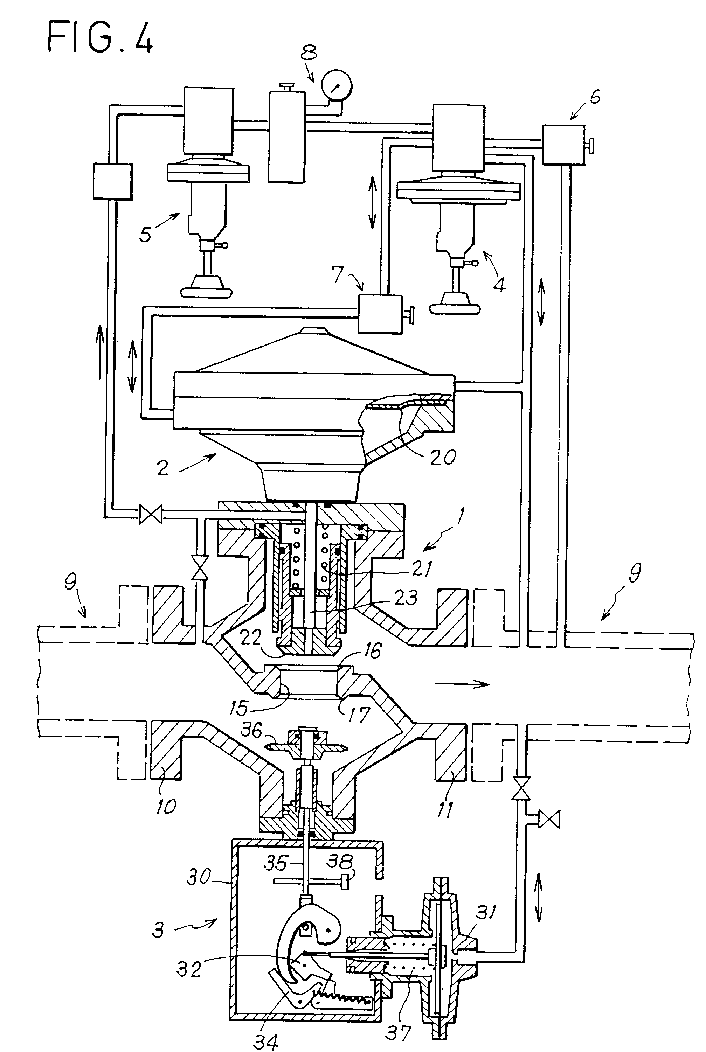

La figure 4 montre un exemple de réalisation d'une vanne de sécurité de l'art antérieur implantée sur un régulateur de pression.

Un régulateur de pression a pour rôle de régler la pression du fluide qui le traverse. Ce réglage est réalisé soit en fonction de la mesure de la pression de ce même fluide prise en aval du régulateur, qui est alors appelé détendeur, ou prise en amont du régulateur, qui se nomme alors déverseur, soit en fonction d'une mesure de pression d'un autre fluide. Lorsque l'on désire une plus grande précision de réglage, on adjoint à ce premier régulateur un second organe appelé pilote qui n'est autre qu'un détendeur qui traite spécifiquement le signal de commande en pression de l'actionneur du régulateur. L'ensemble est alors appelé détendeur-régulateur.

Comme le montre la figure 4, un ensemble régulateur équipé d'une vanne de sécurité se compose principalement de trois parties : une partie centrale 1 qui constitue à la fois le corps du régulateur et le corps de la vanne de sécurité ; une partie supérieure 2 qui constitue l'actionneur du régulateur ; et une partie inférieure 3 qui comprend les moyens de commande de la vanne de sécurité proprement dite.

Des détendeurs 4 et 5, des robinets de laminage 6 et 7 et un dispositif manométrique 8 complètent cet ensemble pour permettre un réglage de la pression dans une conduite principale 9 sur laquelle la vanne de sécurité est montée par l'intermédiaire de deux brides de raccordement amont 10 et aval 11 solidaires du corps 1. Ce corps de façon classique comporte un orifice central 15 disposé perpendiculairement au flux du gaz circulant dans la conduite 9 et qui constitue d'une part à son extrémité supérieure 16 le siège du clapet du régulateur et d'autre part à son extrémité inférieure 17 le siège du clapet de la vanne de sécurité.

L'actionneur 2 du régulateur est munie d'une membrane 20 dont le déplacement entraîne sous l'effet des actions opposées exercées par la pression prise en aval de l'ensemble régulateur/vanne de sécurité et par un ressort de contre-réaction 21, le déplacement vertical du clapet 22 du régulateur par l'intermédiaire d'une tige de poussée 23.

La partie 3 de commande de la vanne de sécurité comprend essentiellement un boîtier de mécanisme 30 et un boîtier manométrique 31. Le boîtier de mécanisme comporte un étage de détection 32 et un étage de puissance 34 qui agissent sur une tige de commande 35 à l'extrémité de laquelle est fixé le clapet 36 de la vanne de sécurité. Ce mécanisme à double étage garantit la précision du déclenchement de cet obturateur 36 qui est commandé par le boîtier manométrique 31 réagissant à un seuil de pression déterminé par le tarage d'un ressort 37. Un levier incorporé 38 permet un réarmement manuel après déclenchement.

Dans un autre exemple de réalisation de l'art antérieur, non représenté, le décrochage peut être commandé manuellement par un bouton poussoir par exemple et la pression du circuit à contrôler peut être également réglée par l'intermédiaire de ressorts àminimum et maximum de pression tarés à des valeurs préfixées.

Ces dispositifs, s'ils assurent correctement la fonction pour laquelle ils ont été conçus, n'en présentent pas moins de nombreux inconvénients.

Tout d'abord, le dispositif de verrouillage du clapet, avec les multiples leviers qui constituent son boîtier de mécanisme et qui sont destinés à démultiplier l'effort engendré par le ressort de clapet, est souvent complexe et fragile ce qui en limite notablement la fiabilité et corrélativement diminue la sécurité que l'on serait en droit d'attendre d'un tel dispositif. Ensuite, cette fragilité du mécanisme nécessite de régler délicatement ces différents leviers qu'une mauvaise manipulation peut rapidement amener à la rupture, laquelle est par ailleurs fréquente lors de la remise en service manuelle du dispositif du fait notamment des efforts mis en jeu par l'action du levier de réarmement manuel. De même, la condensation liée à la détente du gaz entraîne une forte oxydation de ces différents mécanismes et parfois même leur blocage par formation de glace. Enfin, ces différentes manipulations impliquent une action directe d'un opérateur sur le dispositif, ce qui interdit tout utilisation dans le cas de postes de détente enterrés par exemple.

La présente invention a pour but de remédier aux inconvénients précités et de réaliser un dispositif d'arrêt automatique et de sécurité utilisable également pour des postes de détente enterrés et dont la fiabilité globale soit supérieure aux dispositifs existant jusqu'à présent.

Ces buts sont atteints par un dispositif d'arrêt automatique et de sécurité destiné à la coupure du débit de fluides gazeux sur une conduite principale par le déclenchement d'un clapet de sécurité, comportant une vanne de sécurité comprenant un vérin de fermeture du clapet de sécurité etun vérin d'ouverture du clapet de sécurité, et un dispositif indépendant de commande à distance de cette vanne de sécurité comprenant lui-même d'une part un module de commande de fermeture coopérant avec un boîtier manométrique pour délivrer un signal pneumatique tout ou rien au vérin de fermeture en fonction de la valeur de la pression d'un fluide gazeux à contrôler par rapport à au moins une pression de consigne déterminée par le boîtier manométrique, et d'autre part des moyens de commande manuelle pour appliquer au vérin d'ouverture un signal pneumatique tout ou rien de valeur prédéterminée et assurer sélectivement la réarmement du clapet de sécurité, et la vanne de sécurité comportant une tige de poussée commune coopérant à la fois avec le vérin d'ouverture et avec le vérin de fermeture, et dont une extrémité agit sur le clapet de sécurité et l'autre extrémité porte une butée coopérant avec le piston du vérin d'ouverture, la tige de poussée comprenant en outre une gorge prévue pour coopérer avec un dispositif de verrouillage à billes intégré dans le vérin de fermeture du clapet de sécurité.

Selon une caractéristique particulière, le dispositif de commande à distance comprend un régulateur de pression pour permettre de délivrer un signal pneumatique tout ou rien dont les valeurs de niveau haut et de niveau bas sont prédéterminées.

Selon un mode de réalisation particulier, le module de commande de fermeture comporte une tige de commande reliée au boîtier manométrique et munie d'au moins une rampe qui coopère avec une came solidaire d'une tige d'un clapet de commande de fermeture pour transformer un mouvement de translation de la tige de commande se déplaçant en fonction des variations de la valeur de la pression du fluide gazeux en un mouvement de la tige de clapet et provoquer ainsi la délivrance du signal pneumatique tout ou rien au vérin de fermeture du clapet de sécurité en fonction de la valeur de la pression du fluide gazeux à contrôler par rapport à ladite valeur de consigne prédéterminée.

Dans ce cas, avantageusement, ladite tige de commande reliée au boîtier manométrique est munie de deux rampes réglables coopérant avec la came solidaire de la tige de clapet pour provoquer la délivrance d'un signal pneumatique tout ou rien au vérin de fermeture du clapet de sécurité en fonction de la valeur de la pression du fluide gazeux à contrôler par rapport à la fois à une valeur minimum et à une valeur maximum de pression de consigne déterminées par le boîtier manométrique.

A titre d'exemple, le boîtier manométrique comporte une membrane solidaire de la tige de commande et dont le déplacement dépend à la fois de la pression du fluide gazeux à contrôler et de forces contraires élaborées par au moins un ressort de tarage définissant une valeur de pression de consigne.

De façon plus particulière, le boîtier manométrique comprend un premier ressort de tarage définissant une valeur maximum de pression de consigne et un second ressort de tarage définissant une valeur minimum de pression de consigne.

Selon une autre caractéristique avantageuse, le régulateur de pression est intégré dans le corps du dispositif indépendant de commande à distance de la vanne de sécurité

Le régulateur de pression peut assurer la délivrance à partir d'une pression prélevée dans ladite conduite principale en amont de la vanne de sécurité, d'un signal pneumatique dont la valeur de niveau haut est maintenue à une valeur constante très inférieure à ladite pression prélevée.

Selon l'invention, l'action sur le bouton de commande manuelle de réarmement provoque l'ouverture d'un clapet de commande de réarmement et la délivrance d'un signal pneumatique tout ou rien de niveau haut au vérin d'ouverture du clapet de sécurité.

De préférence, la tige de commande comporte à son extrémité libre un bouton moleté pour permettre une commande manuelle de la fermeture du clapet de sécurité.

Le dispositif de verrouillage à billes, intégré dans le vérin de fermeture du clapet de sécurité, comprend une tige annulaire coaxiale à la tige de poussée, solidaire du corps de la vanne de sécurité, et emprisonnant des billes qui sont disposées dans une cavité ménagée dans le piston du vérin de fermeture et coopèrent sélectivement avec une gorge de la tige de poussée.

Selon ce mode de réalisation, le clapet de sécurité étant préalablement ouvert, l'action du signal pneumatique sur le piston du vérin de fermeture provoque son déplacement le long de la tige de poussée qui le traverse, libérant les billes qui sont alors, sous l'effet de la traction exercée par un ressort de clapet, expulsées de la gorge pour venir en contact avec la paroi tronconique de ladite cavité dudit piston du vérin de fermeture, ces billes étant maintenues dans la tige annulaire.

Lorsque la pression exercée sur le piston du vérin de fermeture par le signal pneumatique disparait, celui-ci tend à revenir à sa position initiale sous l'effet d'un ressort de rappel.

Le dispositif d'arrêt automatique et de sécurité selon l'invention est particulièrement adapté pour être appliqué à un poste enterré de détente de gaz.

Dans ce cas, le dispositif indépendant de commande à distance de la vanne de sécurité est lui-même disposé dans un endroit non enterré accessible situé hors de la zone froide de la vanne de sécurité enterrée, et le dispositif indépendant de commande est relié à la vanne de sécurité par des tuyauteries d'application dudit signal pneumatique auxdits vérin de fermeture et vérin d'ouverture.

D'autres caractéristiques et avantages de la présente invention ressortiront mieux à la lecture de la description suivante, donnée à titre indicatif et non limitatif, en référence aux dessins annexés sur lesquels :
- la figure 1 montre le schéma d'ensemble d'un dispositif d'arrêt automatique et de sécurité selon l'invention monté sur un régulateur de pression, selon une vue en coupe,
- la figure 2 représente de façon plus détaillée un exemple de dispositif selon l'invention, placé dans une position "clapet de sécurité ouvert",
- la figure 3 représente le dispositif de la figure 2 placé dans une position "clapet de sécurité fermé", et
- la figure 4 montre une vanne de sécurité de l'art antérieur montée sur un régulateur de pression classique.

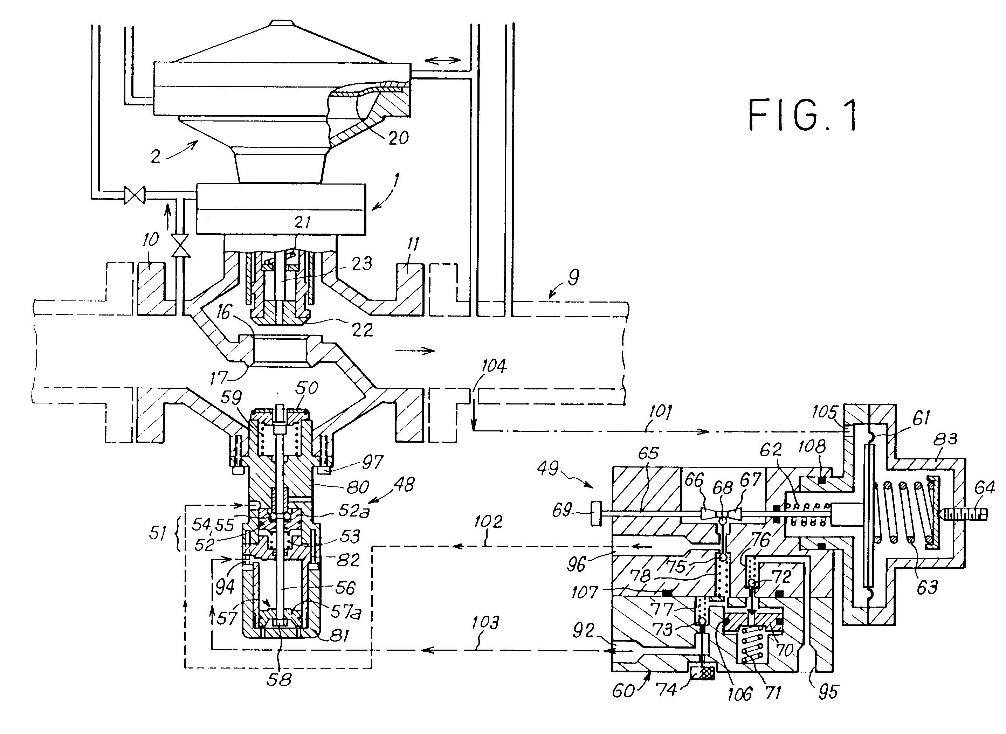

On se réfèrera tout d'abord à la figure 1 qui réprésente un dispositif d'arrêt et de sécurité selon l'invention. Ce dispositif se compose essentiellement de deux éléments physiquement distincts et indépendants 48,49 qui coopèrent pour réaliser l'interruption sélective de l'alimentation en gaz circulant dans une conduite principale 9 sur laquelle peut être fixé un régulateur pouvant comporter un corps 1 et une chambre de mesure 2 classiques analogues à ceux de la figure 4.

Les éléments qui sur la figure 1 sont identiques à ceux de la figure 4 portent, si nécessaire, les mêmes numéros de référence et ne seront pas à nouveau décrits dans le détail.

Le dispositif selon l'invention est constitué d'un premier ensemble 48 qui constitue la vanne de sécurité proprement dite et qui comporte pour l'essentiel un clapet 50 destiné à coopérer avec un siège de clapet 17 intégré au corps 1 pour interrompre la circulation de gaz dans la conduite 9 lorsque la pression dans cette conduite 9, en aval du régulateur dépasse des valeurs de consigne prédéterminées. En temps normal, le clapet 50 est maintenu en position d'ouverture par un dispositif de verrouillage à billes 51 intégré dans l'ensemble 48. Ce dispositif de verrouillage 51 coopère avec un vérin de fermeture 52 du clapet de sécurité 50. Le piston 52a du vérin de fermeture 52 disposé coaxialement à une tige de poussée 56 coopère avec des billes 54 maintenues dans une gorge 55 de cette tige 56. Un ressort de rappel 53 permet le retour du piston 52a dans sa position initiale en l'absence d'alimentation de ce dernier.

La relève du clapet de sécurité 50 est assurée par un vérin d'ouverture 57 comportant un second piston 57a disposé également coaxialement à la tige de poussée 56 et dont une face perpendiculaire à cette tige 56 coopère avec une butée 58 placée à l'une des extrémités de celle-ci, l'autre extrémité de la tige 56 étant fixée sur le clapet 50 sur lequel est monté un ressort de clapet 59. Cette vanne de sécurité 48 est montée en deux parties superposées, une première partie 80 recevant le dispositif de verrouillage 51 avec le vérin de fermeture 52 et une seconde partie 81 recevant le vérin d'ouverture 57. La tige de poussée 56 traverse la première partie et débouche dans la seconde, ces deux parties étant solidarisées entres elles par des moyens de fixation 82 et isolées par des bagues d'étanchéité, le tout étant fixé sur le corps 1 du régulateur par des moyens de liaison 97.

Le second ensemble 49 constitue un dispositif pilote de commande à distance de la vanne de sécurité 48 et comporte lui-même un module de commande de fermeture 61 à 68 coopérant avec un boîtier manométrique 83 pour délivrer un signal pneumatique tout ou rien au vérin de fermeture 52 à travers une ligne 102, le signal pneumatique étant fonction de la valeur de pression d'un fluide gazeux à contrôler, appliqué par une ligne 101 au boîtier manométrique 83, par rapport à au moins une pression de consigne définie au sein de ce boîtier manométrique 83.

Le dispositif de commande à distance 49 comprend en outre un moyen de commande manuelle 74 pour appliquer au vérin d'ouverture 57 par une ligne 103 un signal pneumatique tout ou rien de valeur prédéterminée et assurer sélectivement le réarmement du clapet de sécurité 50.

Les signaux pneumatiques tout ou rien appliqués sur les lignes 102 et 103 entre le dispositif pilote de commande à distance 49 et la vanne de sécurité 48 peuvent être constitués par exemple par un signal de pression présentant soit un niveau bas correspondant à une pression nulle ou quasi nulle soit un niveau haut correspondant à une pression de valeur prédéterminée constante ou pratiquement constante, par exemple de l'ordre de 1 bar. De préférence, la valeur de pression du niveau haut des signaux pneumatiques tout ou rien est déterminée par un petit régulateur de pression 60, qui est avantageusement intégré dans le corps du dispositif de commande à distance 49, mais pourrait aussi le cas échéant être extérieur à celui-ci.

Le signal de pression appliqué à l'entrée 95 du régulateur de pression 60 peut par exemple être prélevé dans une zone de la conduite principale 9 en amont de la vanne de sécurité 45.

Le boîtier manométrique 83 et le module de commande de fermeture comprennent une membrane 61 et deux ressorts de tarage 62 et 63 dont la compression pour le second est réglée par une vis 64.

La membrane 61 est solidaire d'une tige de commande 65 munie de rampes 66 et 67 qui coopèrent avec une came 68 pouvant être constituée par exemple par une bille 68 pour transformer le mouvement longitudinal de la tige 65 en un mouvement vertical de la bille 68 qui agit sur la tige d'un clapet à bille 75 autorisant l'application sélective de la pression de sortie du petit régulateur de pression 60 vers la sortie 96 et la ligne 102.

La tige de commande 65 est avantageusement munie à son extrémité libre d'un bouton moleté 69 qui permet une commande manuelle de la fermeture de la vanne de sécurité 48 indépendamment de la valeur de la pression dans la ligne 101.

Le régulateur de pression 60 comporte un clapet à bille d'entrée 72, dont la tige porte sur un piston 70 coopérant avec un ressort de commande 71 qui assure la délivrance en sortie d'un signal pneumatique à pression constante. La sortie du régulateur de pression 60 est reliée à la sortie 92 et la ligne 103 par l'intermédiaire d'un clapet à bille 73 commandé manuellement par le bouton de commande manuelle 74 pour permettre de délivrer à la vanne de sécurité 48 un signal tout ou rien assurant, lorsqu'il est à un niveau haut,c'est à dire lorsque le clapet 73 est ouvert, le réarmement du dispositif, en assurant l'ouverture du clapet 50 de la vanne de sécurité. La commande de la fermeture du clapet 50 intervient par l'action d'un troisième clapet à bille 75 dont la position de la tige est commandée par le déplacement de la bille 68 coopérant avec les rampes 66,67. Le clapet à bille 75 permet ainsi de délivrer à la vanne de sécurité 48 un signal tout ou rien assurant, lorsqu'il est à un niveau haut, c'est à dire à l'ouverture du clapet à bille 75, l'application de la pression de sortie du régulateur de pression 60 sur la ligne 102. Des ressorts de rappel 76,77,78 sont associés à chacun des clapets à bille 72,73 et 75. De même, divers joints d'étanchéité 106,107, 108 permettent une isolation entre les différents éléments composant le dispositif de commande 49.

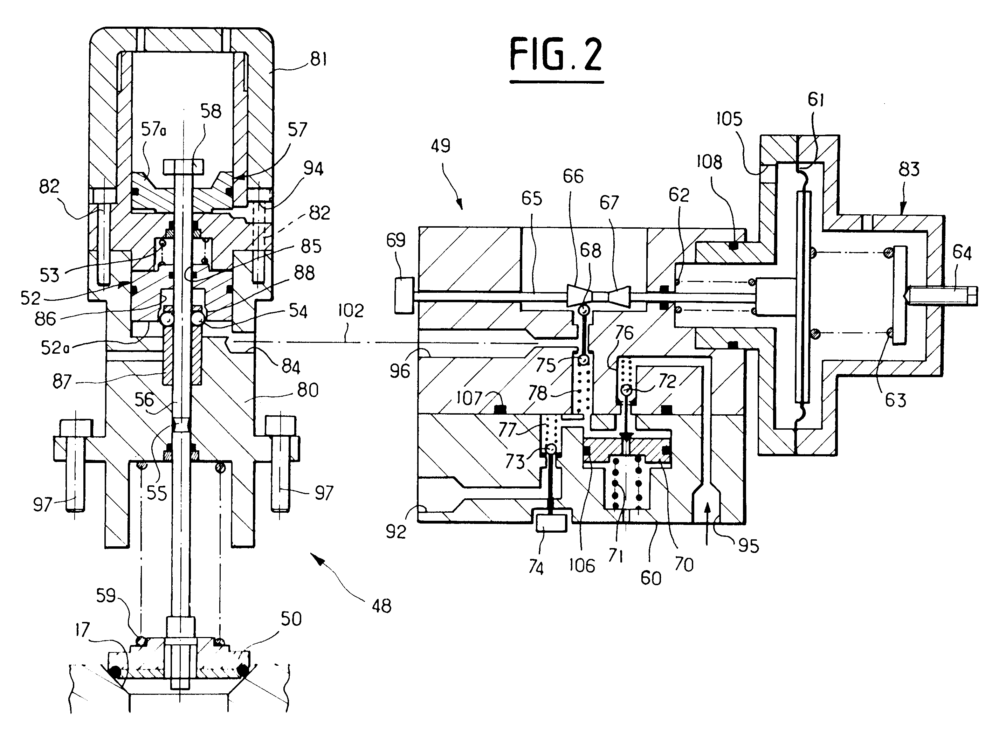

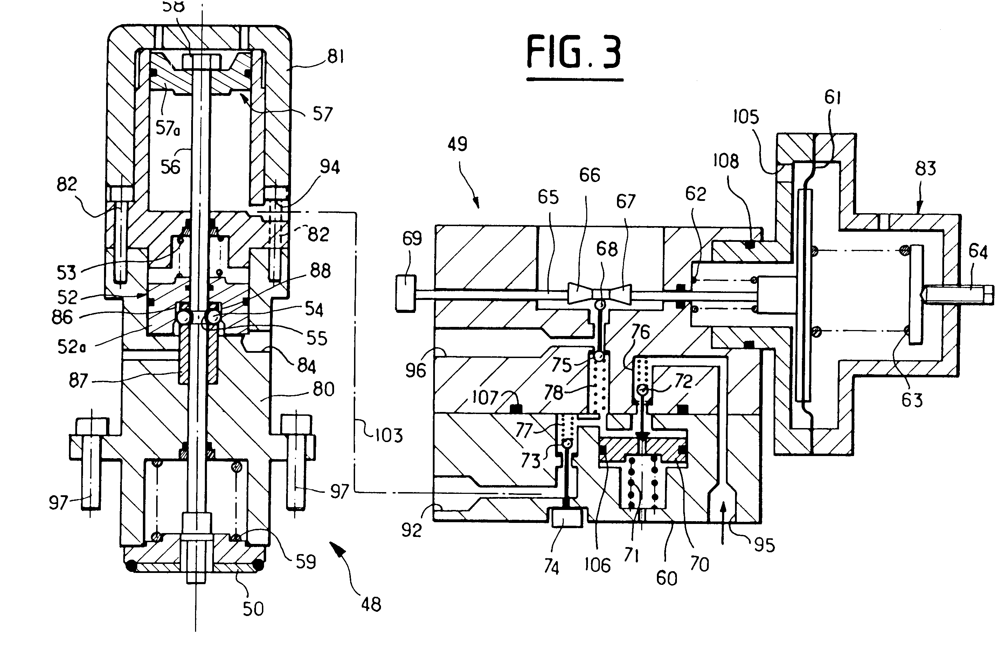

Le fonctionnement du dispositif d'arrêt automatique et de sécurité selon l'invention sera maintenant décrit en regard des figures 2 et 3 qui représentent le dispositif d'arrêt automatique et de sécurité respectivement dans une position déclenchée par dépassement d'un maximum de pression et dans une position armée par l'action du vérin 57 de relève du clapet 50.

La figure 2 montre le dispositif dans une position déclenchée, le clapet étant fermé et reposant sur son siège 17, tandis que le vérin d'ouverture du clapet 57 est non activé.

La pression à contrôler qui est prise par exemple sur un piquage 104 en aval de l'ensemble régulateur/dispositif de sécurité (voir figure 1) parvient à travers une tuyauterie 101, au niveau d'une entrée 105 du boîtier manométrique 83 où elle agit sur une face de la membrane 61.

Cette membrane 61 reçoit par ailleurs les efforts contraires des ressorts 62,63 respectivement de minimum et de maximum de pression tarés à des valeurs prédéterminées, par exemple 4,4.10⁵ Pa pour le maximum et 3,5.10⁵ Pa pour le minimum. Toutefois, la vis de réglage 64 permet si nécessaire d'ajuster la valeur de la consigne de la pression maximale autorisée. Un défaut d'équilibre dû aux variations de pressions contrôlées en dehors du domaine admissible, entraîne la translation de la tige de commande 65 et corrélativement le déplacement vertical de la bille 68 qui reçoit la poussée de l'une ou l'autre des rampes 66 et 67 solidaires de cette tige 65. La position des rampes 66 et 67 est réglable sur la tige 65 ce qui autorise un réglage du déclenchement à minimum de pression. Le déplacement vertical de la bille 68 provoque l'ouverture du clapet 75 qui laisse alors passer le signal de pression en provenance du régulateur de pression 60, lequel signal au travers d'un orifice de sortie 96 et par l'intermédiaire d'une tuyauterie 102, vient commander la fermeture du clapet 50 de la vanne de sécurité 48.

Cette fermeture est obtenue comme suit. Le signal pneumatique parvient à la vanne de sécurité 48 du dispositif selon l'invention au travers d'un orifice d'entrée 84 qui est pratiqué dans la partie 80 de la vanne et constitue le conduit d'alimentation du vérin de fermeture 52 constitué du piston 52a disposé coaxialement à la tige de poussée 56 qui le traverse. Ce piston 52a, qui peut avantageusement présenter une section circulaire et possède une ouverture cylindrique 85 pour permettre le passage de la tige de poussée, est muni d'une cavité 86 coaxiale à l'ouverture précédente mais d'un diamètre supérieur pour loger une tige annulaire 87 solidaire de la partie 80 dans laquelle sont logées les billes 54. L'extrémité débouchante de cette cavité 86 présente une forme tronconique 88 pour permettre la libération des billes 54 maintenues dans la gorge 55 de la tige de poussée 56 lors de la mise sous pression du vérin 52. Cette mise sous pression réalisée par l'arrivée du signal pneumatique de niveau haut provoque le déplacement du piston et l'expulsion des billes 54 de la gorge 55 sous l'effet de la traction exercée par le ressort du clapet 59. Ces billes viennent alors en contact avec la partie tronconique du piston tout en restant toutefois logées dans la tige annulaire 87.

Le clapet 50 en venant en contact avec le siège 17 de la vanne de sécurité provoque la fermeture de celle-ci et l'interruption de la circulation de gaz dans la canalisation principale 9.

Le retour de la pression contrôlée dans la zone de pression admissible provoque un nouveau déplacement en sens contraire de la tige de commande 65 et sous l'action du ressort de rappel 78, la fermeture du clapet à bille 75 interrompant ainsi l'arrivée du signal pneumatique à la vanne de sécurité 48. Il peut aussi être noté qu'une action sur le bouton moleté 69 en provoquant le déplacement de la tige de commande 65 dans la zone de pression admissible aurait un effet comparable. Le piston 52a désactivé tend alors à reprendre sa position initiale sous l'action du ressort de rappel 53. Toutefois, ce dernier ne saurait à lui seul vaincre la force de traction exercée par le ressort de clapet 59 et le clapet reste donc fermé.

La figure 3 montre la position du dispositif selon l'invention après une action d'ouverture du clapet, qui ne peut s'effectuer que manuellement par une opération de réarmement effectuée au moyen de la molette 74.

Le retour de la pression contrôlée dans une plage admissible ne permettant pas d'ouverture automatique du clapet 50 de la vanne de sécurité 48, il est en effet nécessaire de recourir à un dispositif indépendant pour permettre sa relève. Celle-ci est effectuée par une action sur le bouton de commande manuelle 74 qui provoque l'ouverture du clapet à bille 73. Il en résulte la production d'un signal pneumatique de niveau haut, analogue à celui évoqué précédemment, car produit à partir du même régulateur de pression 60, ce signal pneumatique étant dirigé, par un autre orifice de sortie 92 et au travers de la tuyauterie 103, vers un second orifice d'entrée 94 qui est pratiqué dans la partie 81 de la vanne de sécurité 48 et constitue le conduit d'alimentation du vérin d'ouverture 57 constitué par le piston 57a disposé coaxialement à la tige de poussée 56 qui le traverse. La mise sous pression du piston 57a provoque son déplacement ainsi que celui de la tige de poussée 56 par l'intermédiaire de sa butée 58 située à l'une de ses extrémité et en contact avec une face perpendiculaire à cette tige de piston 57a. Le ressort de clapet 59 est comprimé et les billes 54 toujours maintenues par la tige 87 reprennent position dans la gorge 55 sous l'action de la pression exercée sur ces billes par l'extrémité tronconique 88 du piston 52a sous l'effet du ressort de rappel 53. La vanne de sécurité 48 est alors réarmée et prête à une nouvelle action de déclenchement sous l'effet d'un signal de pression de niveau haut appliqué à travers la ligne 102 à partir du dispositif de télécommande 49. Il est à noter que l'action ainsi exercée sur le bouton de commande 74 de relève du clapet peut être effectuée à tout moment, et donc même lorsque la pression contrôlée excède la zone de pression admissible et donc provoque la fermeture du clapet 50. Il en résulte alors une ouverture temporaire de ce clapet, mais la neutralisation de l'action du ressort de rappel 53 par la mise sous pression du piston 52a empêche que les billes 54 ne viennent se loger dans la gorge 55, et le clapet reprend sa position fermée sous l'action du ressort de clapet 59 dès le relâchement de cette action nouvelle sur le bouton 74.

Le relâchement du bouton provoque la désactivation du vérin de relève par la coupure de son alimentation en pression du fait de la fermeture du second clapet 73 sous l'action du ressort de rappel 77, et donc le retour du piston 57 dans sa position intiale (voir figure 1) sous réserve qu'aucun signal de niveau haut ne soit appliqué sur la ligne 102.

Si l'on se réfère de nouveau à la figure 1, il est clair que le dispositif d'arrêt automatique et de sécurité selon l'invention du fait même de la dissociation des deux ensembles 48,49 le composant rend tout à fait possible une utilisation sur des postes de détente enterrés par exemple. En outre, l'élément de commande 49 étant éloigné de la vanne proprement dite soumise tant au froid qu'à la condensation, celui-ci présente une fiabilité bien supérieure qui améliore grandement la fiabilité globale du dispositif. En outre, il peut être noté que le réarmement manuel étant maintenant exercé par un vérin de relève qui exerce une traction constante sur la tige de poussée 56 au contraire des dispositifs de l'art antérieur dans lesquels cette traction dépend de la force très variable exercée par l'opérateur sur un levier de réarmement manuel, les risques de rupture de cette tige de poussée sont considérablement réduits.

Enfin, au contraire des dispositifs de l'art antérieur, la fermeture du clapet n'est pas réalisée sous l'action directe de la pression à contrôler mais, selon le mode de réalisation préférentiel décrit, sous la dépendance d'une pression constante délivrée par un régulateur de pression 60 intégré au dispositif de commande 49.

Le régulateur de pression 60 peut être alimenté par exemple directement par la pression en amont de l'ensemble régulation/vanne de sécurité, laquelle est amenée par une tuyauterie non représentée à un orifice d'alimentation 95 de ce régulateur. Le ressort de commande 71 du piston 70, préalablement taré à une valeur déterminée, détermine la valeur de la pression en sortie du régulateur, par exemple 1 bar, totalement indépendante de la pression à contrôler . Le réglage ou changement du boîtier manométrique 83 pour permettre une adaptation aux conditions d'écoulement du fluide véhiculé par la conduite 9 ne nécessite plus aucune modification de la vanne elle même qui peut donc faire l'objet d'une standardisation.

Divers modifications peuvent être apportées aux dispositifs qui viennent d'être décrits. Aussi, bien que l'on ait représenté deux rampes 66,67 sur les figures 1 à 3, le dispositif de commande 49 pourrait ne comporter qu'une seule rampe dans le cas où le déclenchement ne doit s'opérer qu'en fonction d'une évolution de la pression du fluide à contôler par rapport à une seule pression de consigne pouvant correspondre, selon l'application envisagée, soit à une valeur maximale admissible, soit à une valeur minimale exigée.

## Revendications

1. Dispositif d'arrêt automatique et de sécurité, comportant une vanne de sécurité destinée à la coupure du débit de fluides gazeux sur une conduite principale par le déclenchement d'un clapet de sécurité (50), caractérisé en ce que cette vanne de sécurité (48) comprend un vérin (52) de fermeture du clapet de sécurité (50) et un vérin (57) d'ouverture du clapet de sécurité, (50) et un dispositif indépendant (49) de commande à distance de cette vanne de sécurité (48) comprenant lui-même d'une part un module de commande de fermeture (61 à 68) coopérant avec un boîtier manométrique (83) pour délivrer un signal pneumatique tout ou rien au vérin de fermeture (52) en fonction de la valeur de la pression d'un fluide gazeux à contrôler par rapport à au moins une pression de consigne déterminée par le boîtier manométrique (83), et d'autre part des moyens de commande manuelle (74) pour appliquer au vérin d'ouverture (57) un signal pneumatique tout ou rien de valeur prédéterminée et assurer sélectivement le réarmement du clapet de sécurité (50), en ce que la vanne de sécurité (48) comporte une tige de poussée (56) commune coopérant à la fois avec le vérin d'ouverture (57) et avec le vérin de fermeture (52), et dont une extrémité agit sur le clapet de sécurité (50) et l'autre extrémité porte une butée (58) coopérant avec le piston du vérin d'ouverture (57), la tige de poussée (56) comprenant en outre une gorge (55) prévue pour coopérer avec un dispositif de verrouillage à billes (51) intégré dans le vérin de fermeture (52) du clapet de sécurité (50).

2. Dispositif selon la revendication 1, caractérisé en ce que le dispositif (49) de commande à distance comprend un régulateur de pression (60) pour permettre de délivrer un signal pneumatique tout ou rien dont les valeurs de niveau haut et de niveau bas sont prédéterminées.

3. Dispositif selon la revendication 1 ou la revendication 2, caractérisé en ce que le module de commande de fermeture comporte une tige de commande (65) reliée au boîtier manométrique (83) et munie d'au moins une rampe (66,67) qui coopère. avec une came (68) solidaire d'une tige d'un clapet (75) de commande de fermeture pour transformer un mouvement de translation de la tige de commande (65) se déplaçant en fonction des variations de la valeur de la pression du fluide gazeux en un mouvement de la tige de clapet (75) et provoquer ainsi la délivrance du signal pneumatique tout ou rien au vérin de fermeture (52) du clapet de sécurité (50) en fonction de la valeur de la pression du fluide gazeux à contrôler par rapport à ladite valeur de consigne prédéterminée.

4. Dispositif selon la revendication 3, caractérisé en ce que ladite tige de commande (65) reliée au boîtier manométrique (83) est munie de deux rampes réglables (66,67) coopérant avec la came (68) solidaire de la tige de clapet (75) pour provoquer la délivrance d'un signal pneumatique tout ou rien au vérin de fermeture (52) du clapet de sécurité (50) en fonction de la valeur de la pression du fluide gazeux à contrôler par rapport à la fois à une valeur minimum et à une valeur maximum de pression de consigne déterminées par le boîtier manométrique (83).

5. Dispositif selon l'une quelconque des revendications 3 et 4, caractérisé en ce que le boîtier manométrique (83) comporte une membrane (61) solidaire de la tige de commande (65) et dont le déplacement dépend à la fois de la pression du fluide gazeux à contrôler et de forces contraires élaborées par au moins un ressort de tarage (62,63) définissant une valeur de pression de consigne.

6. Dispositif selon la revendication 5, caractérisé en ce que le boîtier manométrique (83) comprend un premier ressort de tarage (63) définissant une valeur maximum de pression de consigne et un second ressort de tarage (62) définissant une valeur minimum de pression de consigne.

7. Dispositif selon la revendication 2, caractérisé en ce que le régulateur de pression (60) est intégré dans le corps du dispositif indépendant (49) de commande à distance de la vanne de sécurité (48).

8. Dispositif selon la revendication 2 ou la revendication 7, caractérisé en ce que le régulateur de pression (60) assure la délivrance à partir d'une pression prélevée dans ladite conduite principale en amont de la vanne de sécurité (48), d'un signal pneumatique dont la valeur de niveau haut est maintenue à une valeur constante très inférieure à ladite pression prélevée.

9. Dispositif selon l'une quelconque des revendications 1 à 8, caractérisé en ce que l'action sur le bouton de commande manuelle de réarmement (74) provoque l'ouverture d'un clapet (73) de commande de réarmement et la délivrance d'un signal pneumatique tout ou rien de niveau haut au vérin d'ouverture (57) du clapet de sécurité (50).

10. Dispositif selon l'une quelconque des revendications 3 à 6, caractérisé en ce que la tige de commande (65) comporte à son extrémité libre un bouton moleté (69) pour permettre une commande manuelle de la fermeture du clapet de sécurité (50).

11. Dispositif selon l'une quelconque des revendications 1 à 10, caractérisé en ce que le dispositif de verrouillage à billes (51) comprend une tige annulaire (87) coaxiale à la tige de poussée (56), solidaire du corps (80) de la vanne de sécurité (48), et emprisonnant des billes (54) qui sont disposées dans une cavité (86) ménagée dans le piston du vérin de fermeture (52) et coopèrent sélectivement avec une gorge (55) de la tige de poussée (56).

12. Dispositif selon la revendication 11, caractérisé en ce que la cavité (86) comporte une extrémité débouchante de forme tronconique (88).

13. Dispositif selon la revendication 11 ou la revendication 12, caractérisé en ce que le clapet de sécurité (50) étant préalablement ouvert, l'action du signal pneumatique sur le piston du vérin de fermeture (52) provoque son déplacement le long de la tige de poussée (56) qui le traverse, libérant les billes (54) qui sont alors, sous l'effet de la traction exercée par un ressort de clapet (59), expulsées de la gorge (55) pour venir en contact avec la paroi tronconique (88) de ladite cavité (86) dudit piston du vérin de fermeture (52), ces billes (54) étant maintenues dans la tige annulaire (87).

14. Dispositif selon la revendication 13, caractérisé en ce que lorsque la pression exercée sur le piston du vérin de fermeture (52) par la signal pneumatique disparait, celui-ci tend à revenir à sa position initiale sous l'effet d'un ressort de rappel (53).

15. Dispositif selon l'une quelconque des revendications 1 à 14, appliqué à un poste de détente enterré, caractérisé en ce que le dispositif indépendant (49) de commande à distance de la vanne de sécurité (48) est lui-même disposé dans un endroit non enterré accessible situé hors de la zone froide de la vanne de sécurité enterrée (48), et en ce que le dispositif indépendant (49) de commande est relié à la vanne de sécurité (48) par des tuyauteries d'application dudit signal pneumatique auxdits vérin de fermeture (52) et vérin d'ouverture (57).

## Patentansprüche

1. Automatische Sperr- und Sicherheitsvorrichtung mit einem Sicherheitsventil, die bestimmt ist zur Unterbrechung des Durchsatzes gasförmiger Strömungsmittel an einer Hauptleitung durch Betätigen eines Sicherheitsventilkörpers (50), dadurch gekennzeichnet, daß dieses Sicherheitsventil (48) einen Stellantrieb zum Schließen (52) des Sicherheitsventilkörpers (50) und einen Stellantrieb zum Öffnen (57) des Sicherheitsventilkörpers (50) aufweist, sowie eine unabhängige Fernsteuervorrichtung (49) für dieses Sicherheitsventil (48), welche ihrerseits einerseits ein Modul zum Steuern des Schließvorganges (61 bis 68) aufweist, das mit einer Manometerdose (83) zusammenwirkt, um ein pneumatisches EIN-AUS-Signal an den Stellantrieb zum Schließen (52) als Funktion des Wertes des Drucks eines gasförmigen, zu überwachenden Strömungsmittels in Bezug auf mindestens einen bestimmten Vorgabedruck abzugeben, der von der Manometerdose (83) bestimmt wird, und andererseits Mittel zur Handsteuerung (74), um an den Stellantrieb zum Öffnen (57) ein pneumatisches EIN-AUS-Signal mit einem vorbestimmten Wert anzulegen und wahlweise das Zurückstellen des Sicherheitsventilkörpers (50) sicherzustellen, und daß das Sicherheitsventil (48) eine gemeinsame Schubstange (56) aufweist, die gleichzeitig mit dem Stellantrieb zum Öffnen (57) und mit dem Stellantrieb zum Schließen (52) zusammenwirkt und von der das eine Ende auf den Sicherheitsventilkörper (50) einwirkt und das andere Ende ein Widerlager (58) trägt, das mit dem Kolben des Stellantriebs zum Öffnen (57) zusammenwirkt, wobei die Schubstange (56) außerdem eine Einkehlung (55) aufweist, die vorgesehen ist, um mit einer Kugel-Verriegelungsvorrichtung (51) zusammenzuwirken, die in den Stellantrieb zum Schließen (52) des Sicherheitsventilkörpers (50) integriert ist.

2. Vorrichtung nach Anspruch 1, dadurch gekennzeichnet, daß die Fernsteuervorrichtung (49) einen Druckregler (60) aufweist, um es zu gestatten, ein pneumatisches EIN-AUS-Signal abzugeben, dessen Werte mit hohem und niedrigem Niveau vorbestimmt sind.

3. Vorrichtung nach Anspruch 1 oder Anspruch 2, dadurch gekennzeichnet, daß das Modul zum Steuern des Schließvorganges eine Steuerstange (65) aufweist, die mit der Manometerdose (83) verbunden ist und mit mindestens einer Abschrägung (66, 67) versehen ist, die mit einem Nocken (68) zusammenwirkt, der fest mit der Stange eines Ventilkörpers (75) zum Steuern des Schließvorganges verbunden ist, um eine Translationsbewegung der Steuerstange (65), die sich als Funktion der Veränderung des Druckwertes des gasförmigen Strömungsmittels bewegt, in eine Bewegung der Ventilkörperstange (75) umzuformen und somit die Abgabe des pneumatischen EIN-AUS-Signals an den Stellantrieb zum Schließen (52) des Sicherheitsventilkörpers (50) als Funktion des Wertes des Drucks des gasförmingen, zu überwachenden Strömungsmittels in Bezug auf den genannten, vorbestimmten Vorgabedruck hervorzurufen.

4. Vorrichtung nach Anspruch 3, dadurch gekennzeichnet, daß die genannte Steuerstange (65), die mit der Manometerdose (83) verbunden ist, mit zwei einstellbaren Abschrägungen (66, 67) versehen ist, die mit dem Nocken (68) zusammenwirken, der fest mit der Ventilkörperstange (75) verbunden ist, um die Abgabe eines pneumatischen EIN-AUS-Signals an den Stellantrieb zum Schließen (52) des Sicherheitsventilkörpers (50) als Funktion des Wertes des Drucks des gasförmigen, zu überwachenden Strömungsmittels in Bezug gleichzeitig auf einen Minimalwert und einen Maximalwert des Vorgabedruckes hervorzurufen, die durch die Manometerdose (83) bestimmt werden.

5. Vorrichtung nach irgendeinem der Ansprüche 3 und 4, dadurch gekennzeichnet, daß die Manometerdose (83) eine fest mit der Steuerstange (65) verbundene Membran (61) aufweist, und daß deren Verlagerung gleichzeitig vom Druck des gasförmigen, zu überwachenden Strömungsmittels und von Gegenkräften abhängt, die durch mindestens eine Ausgleichsfeder (62, 63) eingestellt werden und einen Vorgabedruckwert festlegen.

6. Vorrichtung nach Anspruch 5, dadurch gekennzeichnet, daß die Manometerdose (83) eine erste Ausgleichsfeder (63) aufweist, die den Maximalwert des Vorgabedrucks festlegt, sowie eine zweite Ausgleichsfeder (62), die einen Minimalwert des Vorgabedrucks festlegt.

7. Vorrichtung nach Anspruch 2, dadurch gekennzeichnet, daß der Druckregler (60) in das Gehäuse der unabhängigen Fernsteuervorrichtung (49) für das Sicherheitsventil (48) integriert ist.

8. Vorrichtung nach Anspruch 2 oder Anspruch 7, dadurch gekennzeichnet, däß der Druckregler (60), von einem erhöhten Druck in der genannten Hauptleitung stromaufwärts vom Sicherheitsventil (48) ausgehend, die Abgabe eines pneumatischen Signals sicherstellt, dessen hoher Pegelwert bei einem konstanten Wert gehalten ist, der sehr viel niedriger ist als der genannte erhöhte Druck.

9. Vorrichtung nach irgendeinem der Ansprüche 1 bis 8, dadurch gekennzeichnet, daß die Einwirkung auf den Hand-Rückstell-Steuerknopf (74) das Öffnen eines Ventilkörpers (73) zum Steuern der Rückstellung und die Abgabe eines pneumatischen EIN-AUS-Signals mit hohem Pegel an den Stellantrieb zum Öffnen (57) des Sicherheitsventilkörpers (50) hervorruft.

10. Vorrichtung nach irgendeinem der Ansprüche 3 bis 6, dadurch gekennzeichnet, daß die Steuerstange (65) an ihrem freien Ende einen Rändelknopf (69) aufweist, um eine Steuerung des Schließens des Sicherheitsventilkörpers (50) von Hand zu gestatten.

11. Vorrichtung nach irgendeinem der Ansprüche 1 bis 10, dadurch gekennzeichnet, daß die Kugel-Verriegelungsvorrichtung (51) eine ringförmige Stange (87) aufweist, die koaxial zur Schubstange (56) ist, fest mit dem Gehäuse (80) des Sicherheitsventils (48) verbunden ist und Kugeln (54) einschließt, die in einer Aussparung (86) angeordnet sind, die in den Kolben des Stellantriebs zum Schließen (52) eingebracht ist, und wahlweise mit einer Einkehlung (55) der Schubstange (56) zusammenwirken.

12. Vorrichtung nach Anspruch 11, dadurch gekennzeichnet, däß die Aussparung (86) ein Mündungsende mit kegelstumpfartiger Form (88) aufweist.

13. Vorrichtung nach Anspruch 11 oder Anspruch 12, dadurch gekennzeichnet, daß dann, wenn der Sicherheitsventilkörper (50) vorab geöffnet ist, die Wirkung des pneumatischen Signals auf den Kolben des Stellantriebes zum Schließen (52) längs der Schubstange (56), die ihn durchsetzt, seine Verlagerung hervorruft, die die Kugeln (54) freigibt, die nun unter Wirkung des Antriebs, der durch eine Ventilkörperfeder (59) ausgeübt wird, aus der Einkehlung (55) herausgedrückt werden, um in Berührung mit der kegelstumpfartigen Wand (88) der genannten Aussparung (86) des genannten Kolbens des Stellantriebs zum Schließen (52) zu gelangen, wobei diese Kugeln (54) in der ringförmigen Stange (87) gehalten werden.

14. Vorrichtung nach Anspruch 13, dadurch gekennzeichnet, daß, wenn der Druck, der auf den Kolben des Stellantriebs zum Schließen (52) durch das pneumatische Signal ausgeübt wurde, aufgehoben wird, dieser danach trachtet, unter der Wirkung einer Rückstellfeder (53) in seine Ausgangslage zurückzukehren.

15. Vorrichtung nach irgendeinem der Ansprüche 1 bis 14, in Anwendung bei einer unterirdischen Entspannungsstation, dadurch gekennzeichnet, daß die unabhängige Fernsteuervorrichtung (49) des Sicherheitsventils (48) ihrerseits an einem nicht-unterirdischen, zugänglichen Ort angeordnet ist, der außerhalb der kalten Zone des unterirdischen Sicherheitsventils (48) liegt, und daß die unabhängige Steuervorrichtung (49) mit dem Sicherheitsventil (48) durch Rohrleitungen zur Anlegung des genannten pneumatischen Signals an den genannten Stellantrieb zum Schließen (52) und den genannten Stellantrieb zum Öffenen (57) verbunden ist.

## Claims

1. Safety and automatic stop device, comprising a safety valve intended for interrupting the flow of gaseous fluid along a main duct by tripping a safety valve member (50), characterized in that said safety valve (48) comprises a closing actuator (52) for closing the safety valve member (50) and an opening actuator (57) for opening the safety valve member (50), and an independent device (49) for remotely controlling said safety valve (48), itself comprising firstly a closing control module (61 to 68) co-operating with a pressure-measuring housing (83) to deliver an on/off pneumatic signal to the closing actuator (52) as a function of the value of the pressure of a gaseous fluid to be controlled relative to at least one reference pressure determined by the pressure-measuring housing (83), and secondly manual control means (74) for applying an on/off pneumatic signal of predetermined value to the opening actuator (57) and for selectively resetting the safety valve member (50), in that the safety valve (48) includes a common push rod (56) cooperating both with the opening actuator (57) and with the closing actuator (52), and of which one end acts on the safety valve member (50) and the other end carries an abutment (58) that cooperates with the piston of the opening actuator (57), the push-rod (56) also including a groove (55) provided to co-operate with a ball-locking device (51) integrated in the closing actuator (52) of the safety valve member (50).

2. Device according to claim 1, characterized in that the remote control device (49) comprises a pressure regulator (60) for enabling an on/off pneumatic signal to be delivered whose high and low level values are predetermined.

3. Device according to claim 1 or claim 2, characterized in that the closing control module includes a control rod (65) connected to the pressure-measuring housing (83) and provided with at least one ramp (66, 67) which co-operates with a cam (68) secured to a rod of a closing control valve member (75) for transforming translation motion of the control rod (65) that moves as a function of variations in the value of the pressure of the gaseous fluid into motion of the rod of the valve member (75), thereby causing an on/off pneumatic signal to be delivered to the closing actuator (52) for closing the safety valve member (50) as a function of the value of the pressure of the gaseous fluid to be controlled relative to said predetermined reference value.

4. Device according to claim 3, characterized in that said control rod (65) connected to the pressure-measuring housing (83) is provided with two adjustable ramps (66, 67) co-operating with the cam (68) secured to the rod of the valve member (75) to cause an on/off pneumatic signal to be delivered to the closing actuator (52) for closing the safety valve member (50) as a function of the value of the pressure of the gaseous fluid to be controlled relative both to a minimum and to a maximum reference pressure value as determined by the pressure-measuring housing (83).

5. Device according to any one of claims 3 or 4, characterized in that the pressure-measuring housing (83) includes a diaphragm (61) secured to the control rod (65) and whose displacement depends both on the pressure of the gaseous fluid to be controlled and on opposing forces generated by at least one setting spring (62, 63) defining a reference pressure value.

6. Device according to claim 5, characterized in that the pressure-measuring housing (83) comprises a first setting spring (63) defining a maximum reference pressure value and a second setting spring (62) defining a minimum reference pressure value.

7. Device according to claim 2, characterized in that the pressure regulator (60) is integrated in the body of the independent device (49) for remotely controlling the safety valve (48).

8. Device according to claim 2 or claim 7, characterized in that the pressure regulator (60) ensures the delivery from a pressure taken from said main duct upstream from the safety valve (48), of a pneumatic signal whose high level value is maintained at a constant value that is considerably less than said taken pressure.

9. Device according to any one of claims 1 to 8, characterized in that action on the manual resetting control knob (74) causes a resetting control valve (73) to be opened and a high level on/off pneumatic signal to be delivered to the opening actuator (57) of the safety valve member (50).

10. Device according to any one of claims 3 to 6, characterized in that the control rod (65) includes a knurled knob (69) at its free end to enable the safety valve member (50) to be closed under manual control.

11. Device according to any one of claims 1 to 10, characterized in that the ball-locking device (51) comprises an annular rod (87) coaxial with the push rod (56), secured to the body (80) of the safety valve (48), and holding captive balls (54) which are disposed in a cavity (86) formed in the piston of the closing actuator (52) and co-operating selectively with a groove (55) of the push rod (56).

12. Device according to claim 11, characterized in that the cavity (86) includes an end that opens out with a flared shape (88).

13. Device according to claim 11 or claim 12, characterized in that the safety valve member (50) being previously opened, the effect of the pneumatic signal on the closing actuator (52) is to cause it to move along the push rod (56) which passes therethrough, thereby releasing the balls (54) which are then expelled from the groove (55) under the effect of the traction exerted by a spring (59) bearing against the valve member, so as to cause them to come into contact with the flared wall (88) of said cavity (86) in said piston of the closing actuator (52), the balls (54) being held in the annular rod (87).

14. Device according to claim 13, characterized in that when the pressure exerted on the piston of the closing actuator (52) by the pneumatic signal disappears, the piston tends to return to its initial position under the effect of a return spring (53).

15. Device according to any one of claims 1 to 14, applied to a buried expansion station, characterized in that the independent remote control device (49) for the safety valve (48) is itself disposed in an accessible, non-buried location situated remote from the cold zone of the buried safety valve (48), and in that the independent control device (49) is connected to the safety valve (48) by pipework for applying said pneumatic signal to said closing actuator (52) and to said opening actuator (57).
